# EUROPÄISCHE PATENTSCHRIFT

(11) **EP 3 113 610 B1**
(45) Veröffentlichungstag und Bekanntmachung des Hinweises auf die Patenterteilung: **04.10.2017**
(21) Anmeldenummer: 15706483.3
(22) Anmeldetag: 26.02.2015
(51) Int. Cl.: A01N 25/04, A01N 59/24

(54) **EMULGIERBARE ODER SELBSTEMULGIERENDE ZUSAMMENSETZUNG ENTHALTEND CYANAMID**
EMULSIFIABLE OR SELF-EMULSIFYING CYANAMIDE-CONTAINING COMPOSITION
COMPOSITION ÉMULSIONNABLE OU AUTO-ÉMULSIONNABLE COMPRENANT DU CYANAMIDE

(30) Priorität: 01.03.2014 DE 102014003082
(43) Veröffentlichungstag der Anmeldung: 11.01.2017
(73) Patentinhaber: AlzChem AG, 83308 Trostberg (DE)
(72) Erfinder: GÜTHNER, Thomas, 83308 Trostberg (DE)
(74) Vertreter: Weickmann & Weickmann PartmbB
(86) Internationale Anmeldenummer: PCT/EP2015/054051
(87) Internationale Veröffentlichungsnummer: WO 2015/132129

(56) Entgegenhaltungen:
- EP-A1- 0 095 065
- DE-A1- 2 642 023
- US-A- 3 295 926

## Beschreibung

Die vorliegende Erfindung betrifft eine emulgierbare oder selbstemulgierende flüssige Zusammensetzung zur Regulierung des Pflanzenwachstums, die Cyanamid umfasst.

Cyanamid wurde erstmals 1838 von A. Bineau durch die Reaktion von Ammoniak und Chlorcyan synthetisch hergestellt (Ann. Chim. Paris 67 (1838) 225-272). In technischen Mengen wird Cyanamid heute aus Kalkstickstoff gewonnen. Eine elegante Methode zur Herstellung von Kalkstickstoff wurde 1895 von Frank und Caro entdeckt (DE 88 363 A, (1895)), welche eigentlich auf der Suche nach neuen Verfahren zur Synthese von Cyaniden für die Goldlaugung waren. Bei dem nach den Erfindern benannten Frank-Caro-Verfahren wird Stickstoff bei 1000°C über pulverförmiges Calciumcarbid geleitet, wobei sich der Kalkstickstoff in einer exothermen Reaktion bildet. Aus wässrigen Suspensionen des Kalkstickstoffs lässt sich das Cyanamid durch Einleiten von Kohlendioxid freisetzen.

Cyanamid wird heute üblicherweise in Form einer wässrigen Lösung, meist im Konzentrationsbereich um 50 Gew.-%, vermarktet. Zudem wird Cyanamid als Feststoff mit ca. 99 %-igem Gehalt vermarktet.

Cyanamid und dessen wässrige Lösung stellen ein vielseitig einsetzbares Zwischenprodukt, speziell für Agrochemikalien, Pharmawirkstoffe, Farbstoffe und Biozide dar (vgl. Güthner, T. and Mertschenk, B. (2006) Vol. 10: Cyanamides, Ullmann's Encyclopedia of Industrial Chemistry, S. 645-667). Cyanamid selbst wird u.a. als Agrowirkstoff zur Dormanz-Brechung, als Biozid sowie als Pharmakon gegen Alkoholismus eingesetzt.

So wird u.a. in den deutschen Patentanmeldungen DE 27 37 454 A und DE 31 50 404 C2 beschrieben, dass Cyanamid als Mittel zur Beeinflussung des Pflanzenwachstums im Weinbau, insbesondere zur Abtötung der Stocktrieben von Rebstöcken, oder als Mittel zur Brechung der Knospendormanz eingesetzt werden kann. Zudem wird in der Europäischen Patentanmeldung EP 185 254 A1 beschrieben, dass Cyanamid die Verlängerung der Dormanz von Pflanzen oder Pflanzenteilen bewirkt. Weiterhin wird in der europäischen Patentanmeldung EP 405 510 A2 beschrieben, dass Cyanamid zur Bewurzelung von Stecklingen eingesetzt werden kann. Cyanamid wird hierbei jeweils als wässrige Lösung mit unterschiedlichen Konzentrationen eingesetzt. Darüber hinaus ist mit CN 102 599 191 A bekannt, dass Calziumcyanamid-Öl-Suspensionen als "dormancy breaking agent" eingesetzt werden können.

Weiterhin ist bekannt, dass wässrige Cyanamidlösungen über einen längeren Lagerzeitraum instabil sind, d.h., dass das Cyanamid in wässrigen Lösungen, insbesondere bei Lagertemperaturen oberhalb 20 °C, Abbaureaktionen unterliegt. Untersuchungen hierzu haben gezeigt, dass sich dabei in einem pH-Bereich unter pH 3 und oberhalb pH 12 im wesentlichen Harnstoff bildet, während ab pH 8 bis 10,0, die Dimerisierung zu Dicyandiamid vorherrscht. Handelsübliche wässrige Cyanamidlösungen, die zudem bereits mit Stabilisatoren versetzt sind, weisen deshalb einen pH-Wert im Bereich von pH 3 bis 5 auf. Diese handelsüblichen wässrige Cyanamidlösungen sind bei Lagertemperaturen zwischen 10 und 20 °C bis zu 12 Monaten haltbar, bevor ihr Cyanamidgehalt unter Dimerisierung zu Dicyandiamid merklich abfällt. Als Stabilisatoren werden hierbei in Übereinstimmung mit EP 95 065 81 zweiwertige Magnesiumsalze eingesetzt.

US 3,295,926 offenbart, dass zur Stabilisierung von Cyanamid Ethylenglykol-monomethyletheracetat, Ethylenglykol-monoethylether-acetat oder Ethylenglykol-diacetat eingesetzt werden können.

DE 26 42 023 beschreibt, dass Cyanamid enthaltende wässrige Lösungen durch Zusatz eines Carbonsäureesters stabilisiert werden können.

Kundenbefragungen haben nunmehr gezeigt, dass insbesondere die Lagerstabilität als ein wesentliches Argument für die Verwendung von Cyanamid als Wachstumsregulator genannt wird.

Aufgabe der vorliegenden Erfindung ist somit eine Zusammensetzung zur Verfügung zu stellen, die in der Landwirtschaft zur Regulierung des Pflanzenwachstums eingesetzt und in der Anwendung als anwendungssicher eingestuft werden kann. Zudem stellt sich die Aufgabe,eine lagerstabile Cyanamid-haltige Zusammensetzung mit einer hohen Wirkung als Pflanzenwachstumsregulator bereit zu stellen. Weiterhin soll eine Zusammensetzung bereitgestellt werden, die bei der Anwendung als unbedenklich eingestuft werden kann, und die im Vergleich zu bekannten Formulierungen unter Einsatz einer geringeren Menge an Wirkstoff eine zumindest gleiche Wirkung erzielt.

Erfindungsgemäß werden diese Aufgaben durch eine Zusammensetzung gemäß Anspruch 1 gelöst. Demnach ist eine emulgierbare oder selbstemulgierende flüssige Zusammensetzung zur Regulierung des Pflanzenwachstums Gegenstand der vorliegenden Erfindung, die
a) 5 bis 50 Gew.-% Cyanamid,
b) 10 bis 90 Gew.-% eines Gemisches aus mindestens einem Öl und mindestens einem mit Wasser mischbaren organischen Lösemittel, und
c) 0,1 bis 10 Gew.-% mindestens eines Emulgators, umfasst, wobei das Cyanamid in der Zusammensetzung, insbesondere in dem Gemisch und ganz besonders bevorzugt in dem organischen Lösemittel in gelöster Form vorliegt.

Dabei kann eine erfindungsgemäße Zusammensetzung bevorzugt mindestens 10 Gew.-%, insbesondere mindestens 15 Gew.-% und ganz besonders bevorzugt mindestens 20 Gew.-% Cyanamid enthalten, wobei gleichzeitig höchstens 50 Gew.-% Cyanamid enthalten sind.

Wesentlich ist hierbei, dass das Cyanamid (CH₂N₂, CAS-Nr. 420-04-2) als solches und nicht als Salz eingesetzt wird und, dass das Cyanamid in gelöster Form, insbesondere in dem Gemisch in gelöster Form und ganz besonders bevorzugt in dem organischen Lösemittel in gelöster Form, vorliegt. Somit kann die flüssige Zusammensetzung bei der Vermischung mit Wasser eine Emulsion ausbilden, die als anwendungssicher in Bezug auf die Menge an Wirkstoff einzustufen ist. Sollte beispielsweise Cyanamid in der Zusammensetzung in fester Form, somit ungelöst vorliegen, so wäre eine gleichmäßige Verteilung des Cyanamids nicht gewährleistet, da ein Wirkstoff in fester Form in einer flüssigen Phase immer zur Sedimentation neigt.

Unter dem Begriff Emulsion ist dabei und im Sinne der vorliegenden Erfindung eine Mischungen von wenigstens zwei flüssigen Komponenten zu verstehen, die nicht vollständig miteinander mischbar sind und die insbesondere eine Mischungslücke aufweisen. Hierbei ist eine Komponente als dispergierte oder innere flüssige Phase in einer anderen kohärenten äußeren flüssigen Phase verteilt. Unter dem Begriff Öl-in-Wasser-Emulsion, auch als O/W-Emulsion bezeichnet, ist im Sinne der vorliegenden Erfindung eine Emulsion zu verstehen, in der eine Ölphase in einer kohärenten hydrophilen, vorzugsweise wässrigen Phase dispergiert ist. Die Ölphase umfasst eine hydrophobe, mit Wasser nicht mischbare organische Phase, die ein Öl umfasst. Hierbei ist die Ölphase in der hydrophilen, vorzugsweise wässrigen Phase in Form von Tröpfchen dispergiert. Unter dem Begriff Wasser-in-Öl-Emulsion, auch als W/O-Emulsion bezeichnet, ist im Sinne der vorliegenden Erfindung eine Emulsion zu verstehen, in der eine Wasserphase oder eine wässrige Phase in einer kohärenten hydrophoben Phase, vorzugsweise Ölphase, dispergiert ist. Von dem Begriff Emulsion werden im Sinne der vorliegenden Erfindung auch Miniemulsionen und Mikroemulsionen umfasst.

Weiterhin soll unter einer emulgierbaren oder selbstemulgierenden flüssigen Zusammensetzung eine solche flüssige Zusammensetzung verstanden sein, die nach der Zugabe zu Wasser (oder der Zugabe von Wasser zu der Zusammensetzung) selbstständig eine Emulsion ausbildet oder, die nach der Zugabe zu Wasser (oder der Zugabe von Wasser zu der Zusammensetzung) und einer mechanischen Vermischung, wie beispielsweise Rühren, eine Emulsion ausbildet.

Dabei soll unter einer flüssigen Zusammensetzung gemäß der vorliegenden Erfindung ein Zusammensetzung verstanden sein, die einen Schmelzpunkt Sₘ mit Sₘ < 20 °C (Normaldruck) aufweist und/oder, die bei einer Temperatur von 20 °C (Normaldruck) flüssig vorliegt und eine Viskosität von weniger als 1 Pa*s aufweist. Die erfindungsgemäßen flüssigen Zusammensetzungen weisen vorzugsweise eine Viskosität von ≤ 500 mPa*s, mehr bevorzugt von < 100 mPa*s und noch mehr bevorzugt von ≤ 50 mPa*s bei 25 °C (Normaldruck) auf. Besonders bevorzugt sind jedoch solche flüssigen Zusammensetzungen, die einen Schmelzpunkt Sₘ mit Sₘ < 10 °C (Normaldruck), ganz besonders bevorzugt einen Schmelzpunkt Sₘ mit Sₘ < 0 °C (Normaldruck), aufweisen und/oder, die bei einer Temperatur von 10 °C (Normaldruck), ganz besonders bevorzugt bei einer Temperatur von 0 °C (Normaldruck), flüssig vorliegen und eine Viskosität von weniger als 1 Pa*s aufweisen.

Überraschenderweise hat sich gezeigt, obwohl bekannt ist, dass Cyanamid in gelöster Form weniger Lagerstabil ist als in fester Form, dass die erfindungsgemäße Zusammensetzung auch lagerstabil ist. Untersuchungen hierzu haben ergeben, dass durch den Einsatz und die Wahl eines mit Wasser mischbaren Lösungsmittels eine Lagerstabilität erreicht werden kann, die über derjenigen Lagerstabilität liegt, die handelsübliche wässrig Cyanamidlösungen aufweisen. Zudem hat sich gezeigt, dass durch den Einsatz von Öl, einem mit Wasser mischbaren Lösemittel und einem Emulgator eine Zusammensetzung, insbesondere ein Konzentrat, bereitgestellt werden kann, das bei Zugabe von Wasser eine Emulsion - somit ein fein verteiltes Zweiphasengemisch - bilden kann, die bzw. das eine verbesserte Applikation des Wirkstoffes ermöglicht. Ohne an die Theorie gebunden zu sein, kann gesagt werden, dass bei der Anwendung als Emulsion und durch den Anteil an Öl in Verbindung mit dem Emulgator in der Zusammensetzung eine bessere Benetzung der zu behandelnden Flächen mit dem Wirkstoff erzielt werden kann. Hierdurch kann der Wirkstoff Cyanamid einer Pflanze leichter zugänglich gemacht werden. Gleichzeitig kann durch die Wahl des mit Wasser mischbaren Lösungsmittels eine Zusammensetzung bereitgestellt werden, die im Vergleich zu wässrigen Cyanamidlösungen lagerstabiler ist. In Summe waren diese positiven Eigenschaften nicht vorhersehbar.

Dabei ist im Zusammenhang mit der vorliegenden Erfindung unter einem mit Wasser mischbaren organischen Lösemittel jedwedes organische Lösemittel zu verstehen, das definitionsgemäß verschieden ist von Wasser, das Cyanamid vollständig auch über einen längeren Zeitraum von mehreren Monaten in Lösung hält und das für den Einsatz in der Landwirtschaft geeignet ist. Als mit Wasser mischbares organisches Lösemittel soll weiterhin jedwedes Lösemittel verstanden sein, dass im Massenverhältnis 1 : 1 mit Wasser bei 20 °C ein einphasiges System ergibt.

Mit den dieser Erfindung zugrundeliegenden Untersuchungen hat sich herausgestellt, dass als mit Wasser mischbares organisches Lösemittel insbesondere organische Lösemittel ausgewählt wird aus der Gruppe der wasserlöslichen Alkohole, Ketone, Nitrile und Amide sowie Mischungen hiervon, verwendet werden können.

Besonders positiv haben sich hierbei organische Lösemittel ausgewählt wird aus der Gruppe Ethanol, Isopropanol, n-Propanol, Aceton, Methylethylketon, Acetonitril, Propionitril, Formamid, Dimethylformamid und N-Methylpyrrilidon sowie Mischungen hiervon gezeigt. Gemäß einer besonders bevorzugten Ausführung der Erfindung umfasst die flüssige Zusammensetzung als organisches Lösemittel Ethanol, Isopropanol und/oder n-Popanol. Flüssige Zusammensetzungen mit diesen organischen Lösemitteln bilden besonders stabile flüssige Formulierungen, die gegenüber wässrigen Lösungen über einen größeren Zeitraum gelagert werden können.

Wie sich in weiterführenden Untersuchungen auch gezeigt hat, sollte so wenig Wasser wie möglich in einer erfindungsgemäßen Zusammensetzung enthalten sein. Daher ist gemäß einer Weiterbildung der Erfindung insbesondere auch eine emulgierbare oder selbstemulgierende flüssige Zusammensetzung Gegenstand der vorliegenden Erfindung, die weniger als 10 Gew.-%, insbesondere weniger als 5 Gew.-%, besonders bevorzugt weniger als 3 Gew.-% Wasser weiterhin bevorzugt weniger als 2 Gew.-% Wasser und ganz besonders bevorzugt weniger als 1 Gew.-% Wasser enthält. Diese Zusammensetzungen haben sich als besonders lagerstabil herausgestellt.

Weiterhin soll im Zusammenhang mit der vorliegenden Erfindung unter einem Öl jedwedes Öl verstanden sein, dass für den Einsatz in der Landwirtschaft geeignet ist. Insbesondere kann das Öl ausgewählt werden aus der Gruppe der natürlichen Öle, insbesondere Öle tierischer oder pflanzlicher Herkunft, und synthetische Öle. Gemäß der vorliegenden Erfindung können als Öl insbesondere natürliche Öle, insbesondere Pflanzenöle verwendet werden. Pflanzenöle sind allgemein bekannt und kommerziell erhältlich. Unter dem Begriff Pflanzenöle im Sinne der vorliegenden Erfindung werden Öle aus ölliefernden Pflanzenarten wie Sojaöl, Maiskeimöl, Sonnenblumenöl, Rapsöl, Baumwollsaatöl, Leinöl, Kokosöl, Palmöl, Distelöl, Erdnussöl, Walnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle gemäß der vorliegenden Erfindung sind bevorzugt Gemische aus C10- bis C22-Fettsäureester. Diese C10- bis C22-Fettsäureester sind beispielsweise Ester ungesättigter oder gesättigter C10- bis C22-Fettsäuren, insbesondere mit gerader Kohlenstoffatomzahl, weiterhin bevorzugt ausgewählt aus der Gruppe Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Palmitoleinsäure (Hexadecyl-9-ensäure), Petroselinsäure (Octadecyl-6-ensäure), Ölsäure (Octadecyl-9-ensäure), Elaidinsäure (Octadecyl-9-ensäure), Gadoleinsäure (Eicosan-9-ensäure), Erucasäure (13-Docosensäure), Linolsäure (Octadec-9,12-diensäure), alpha-Linolensäure (Octadec-9,12,15-triensäure), gamma-Linolensäure (Octadec-6,9,12-triensäure) oder Mischungen hiervon.

Beispiele für Pflanzenöle sind C10- bis C22-Fettsäureester von Glycerin oder Glykol mit C10-bis C22-Fettsäuren, insbesondere Ester der aufgeführten Säuren, oder C10- bis C22-Fettsäureester, insbesondere Ester der aufgeführten Säuren, wie sie z.B. durch Umesterung der vorgenannten Glycerin- oder Glykolester der C10- bis C22-Fettsäure mit C1- bis C20-Alkoholen, wie beispielsweise Methanol, Ethanol, Propanol oder Butanol, erhalten werden können.

Die Pflanzenöle können in den erfindungsgemäßen flüssigen Zusammensetzungen beispielsweise in Form kommerziell erhältlicher Pflanzenöle, insbesondere Rapsöle wie Rapsölmethylester, beispielsweise Phytorob^{®} B (Novance, Frankreich), Edenor^{®} MESU und Agnique^{®} ME-Reihe (Cognis, Deutschland), Radia^{®} (ICI) oder Prilube^{®} (Petrofina) enthalten sein.

Insofern synthetische Öle eingesetzt werden, sind Mineralöl, Paraffinöl, Weissöl sowie synthetische Fettsäureester, insbesondere Ester von Fettsäuren mit ungerader Kohlenstoffatomanzahl, wie beispielsweise C11- bis C19-Fettsäuren, insbesondere ausgewählt aus der Gruppe Undecansäure, Tridecansäure, Pentadecansäure, Margarinsäure (Heptadecansäure) und Nonadecansäure, mit ein-, zwei- oder dreiwertigen C1- bis C5-Alkoholen, insbesondere Methanol, Ethanol, Propanol oder Butanol, bevorzugt.

Gemäß der vorliegenden Erfindung kann daher als Öl insbesondere ein Öl ausgewählt aus der Gruppe Mineralöl, Paraffinöl, Weissöl, gesättigte lineare oder verzweigte aliphatische Kohlenwasserstoffe, Ester von gesättigten oder ungesättigten Fettsäuren mit ein-, zwei- oder dreiwertigen C1- bis C5-Alkoholen, Ether von Fettalkoholen mit C1- bis C5-Alkoholen sowie Mischungen hiervon eingesetzt werden.

Weiterhin hat sich gezeigt, dass eine flüssige Zusammensetzung mit einem Gemisch aus mindestens einem mit Wasser mischbaren organischem Lösemittel und mindestens einem Öl gemäß der vorliegenden Erfindung gute Resultate bei der Herstellung der anzuwendenden Emulsion zeigt, wenn das mindestens eine organische Lösemittel und das mindestens eine Öl in einem definierten Mengenverhältnis zueinander in dem Gemisch enthalten sind. Hierbei hat sich gezeigt, dass ein Gemisch aus mindestens einem organischen Lösemittel und mindestens einem Öl in einem Gewichtsverhältnis organisches Lösemittel : Öl besonders gute Ergebnisse erzielt, wenn das Gewichtsverhältnis einem Verhältnis von 4 : 1 bis 1 : 4, insbesondere von 2 : 1 bis 1 : 2 und ganz besonders bevorzugt von 1,5 : 1 bis 1 : 1,5 entspricht. Flüssige Zusammensetzungen mit diesen definierten Gewichtsverhältnissen von organisches Lösemittel : Öl bilden besonders stabile Emulsionen.

Gemäß einer besonders bevorzugten Ausführung der Erfindung umfasst die flüssige Zusammensetzung ein Gemisch, das als organisches Lösemittel Ethanol und als Öl ein Pflanzenöl oder ein Gemisch aus verschiedenen Estern von gesättigten oder ungesättigten Fettsäuren mit ein-, zwei- oder dreiwertigen C1- bis C5-Alkoholen, weiterhin bevorzugt Rapsölmethylester, enthält, wobei weiterhin bevorzugt das Gewichtsverhältnis Ethanol : Öl dem Verhältnis von 4 : 1 bis 1 : 4, oder ganz besonders bevorzugt 2 : 1 bis 1 : 2 entspricht.

Gemäß der vorliegenden Erfindung kann die emulgierbare oder selbstemulgierende flüssige Zusammensetzung 10 bis 90 Gew.-% eines Gemisches aus mindestens einem Öl und mindestens einem mit Wasser mischbaren organischen Lösemittel umfassen. Besonders bevorzugt kann die Zusammensetzung jedoch auch mindestens 20 Gew.-%, insbesondere mindestens 30 Gew.-%, insbesondere mindestens 40 Gew.-%, insbesondere mindestens 50 Gew.-%, insbesondere 60 Gew.-% und gleichzeitig oder unabhängig hiervon höchstens 90 Gew.-% eines Gemisches aus mindestens einem Öl und mindestens einem mit Wasser mischbaren organischen Lösemittel umfassen. Gleichzeitig oder unabhängig hiervon kann jedoch auch vorgesehen sein, dass die flüssige Zusammensetzung höchstens 85 Gew.-%, insbesondere höchstens 80 Gew.-% oder weiter bevorzugt höchstens 75 Gew.-% eines Gemisches aus mindestens einem Öl und mindestens einem mit Wasser mischbaren organischen Lösemittel umfasst.

Besonders bevorzugt ist eine emulgierbare oder selbstemulgierende flüssige Zusammensetzung, die 50 bis 80 Gew.-% eines Gemisches aus mindestens einem mit Wasser mischbaren organischen Lösemittel und mindestens einem Öl umfasst, wobei das Gewichtsverhältnis organisches Lösemittel : Öl einem Verhältnis von im Bereich von 4 : 1 bis 1 : 4, oder ganz besonders bevorzugt 2 : 1 bis 1 : 2, entspricht.

Ganz besonders bevorzugt ist eine emulgierbare oder selbstemulgierende flüssige Zusammensetzung, die 50 bis 80 Gew.-% eines Gemisches aus Ethanol und Rapsölmethylester, umfasst, wobei das Gewichtsverhältnis Ethanol : Rapsölmethylester einem Verhältnis im Bereich von 4 : 1 bis 1 : 4, oder ganz besonders bevorzugt 2 : 1 bis 1 : 2, entspricht. Gleichzeitig oder unabhängig hiervon kann diese Zusammensetzung 15 bis 50 Gew.-% Cyanamid umfassen.

Damit das Öl der Zusammensetzung bzw. des Gemisches nach der Zugabe der Zusammensetzung zu Wasser oder nach der Zugabe von Wasser zu der Zusammensetzung in dem Wasser oder das Wasser in dem Öl selbstständig oder nach der Vermischung emulgiert werden kann, umfasst eine flüssige Zusammensetzung gemäß der vorliegenden Erfindung mindestens einen Emulgator. Somit ist weiterhin gewährleistet, dass eine anwendungssichere Zusammensetzung vorliegt, die nicht sofort nach dem Zusammengeben der Zusammensetzung und dem Wasser ein Zweiphasengemisch mit zwei kohärenten Phasen ausbildet. In bevorzugten Ausführungsformen enthält die flüssige Zusammensetzung Emulgatoren, die nichtionisch, anionisch, kationisch, amphoter oder zwitterionisch sein können, oder deren Gemische. Insbesondere umfasst die Zusammensetzung mindestens einen nichtionischen Emulgator.

Gleichzeitig oder unabhängig hiervon umfasst eine erfindungsgemäße Zusammensetzung mindestens einen Emulgator, ausgewählt aus der Gruppe der ÖI-in-Wasser-Emulgatoren (O/W-Emulgator), Wasser-in-Öl-Emulgatoren (W/O-Emulgator), Öl-in-Wasser-in-Öl-Emulgatoren (O/W/O-Emulgator) oder Wasser-in-Öl-in-Wasser-Emulgatoren (W/O/W-Emulgator), insbesondere einen Öl-in-Wasser-Emulgator. Gemäß einer besonders bevorzugten Ausführung umfasst die Zusammensetzung mindestens einen ÖI-in-Wasser-Emulgatoren und/oder einen nichtionischen Emulgator und ganz besonders bevorzugt mindestens einen nichtionischen Emulgator aus der Klasse der Öl-in-Wasser-Emulgatoren.

Bevorzugte nichtionische Emulgatoren sind ausgewählt aus der Gruppe enthaltend Fettsäurepolyglykolester, Alkylarylpolyglykolether, Fettalkoholpolyglykolether, ethoxylierte Fettalkohole, ethoxylierte Nonylphenole, Fettsäuremonoglyceride, Fettsäurediglyceride, ethoxyliertes und hydriertes oder nicht hydriertes Rizinusöl und Fettsäurealkanolamide.

Bevorzugte kationische Emulgatoren sind ausgewählt aus der Gruppe enthaltend langkettige quaternäre Ammoniumverbindungen wie Alkyltrimethylammoniumsalze und Dialkyldimethylammoniumsalze mit C8- bis C22-Alkylgruppen.

Bevorzugte anionische Emulgatoren sind ausgewählt aus der Gruppe enthaltend Fettalkoholsulfate, Alkylethersulfate und Alkylbenzolsulfonate.

Bevorzugte amphotere Emulgatoren sind ausgewählt aus der Gruppe enthaltend Betaine wie Fettsäureamidoalkylbetaine und Sulfobetaine und C8- bis C22-Alkylbetaine.

Besonders bevorzugt sind nichtionische Emulgatoren aus der Klasse der ethoxylierte Fettalkohole, insbesondere ethoxylierte C8- bis C20-Alkylalkohole. Weiterhin bevorzugt ist ein nichtionischer O/W-Emulgator aus der Klasse der ethoxylierten C8- bis C20-Alkylalkohole und ganz besonders bevorzugt ein iso-C13-Ethoxylat.

Ohne an die Theorie gebunden zu sein, kann gesagt werden, dass bei der Anwendung der erfindungsgemäßen flüssigen Zusammensetzung, d.h. bei der Anwendung als Emulsion durch den Anteil an Öl in Verbindung mit dem Emulgator in der Zusammensetzung eine bessere Benetzung der zu behandelnden Flächen mit dem Wirkstoff erzielt werden kann. Somit kann der Wirkstoff Cyanamid im Vergleich zu einer rein wässrigen Zusammensetzung seine Wirkung als Pflanzenwachstumsregulator besser entfalten.

Gemäß der vorliegenden Erfindung kann die emulgierbare oder selbstemulgierende flüssige Zusammensetzung 0,1 bis 10 Gew.-% mindestens eines Emulgators umfassen. Besonders bevorzugt kann die Zusammensetzung jedoch auch 0,1 bis 5 Gew.-% mindestens eines Emulgators und ganz besonders bevorzugt 0,1 bis 3 Gew.-% mindestens eines Emulgators umfassen.

Im Umfang der vorliegenden Erfindung kann weiterhin vorgesehen sein, dass die emulgierbare oder selbstemulgierende Zusammensetzung weitere Inhaltsstoffe, insbesondere Hilfs- und Zusatzstoff, umfassen kann. Dabei ist weiterhin vorgesehen, dass die Zusammensetzung weiterhin mindestens einen weiteren Hilfs- und Zusatzstoff, insbesondere aus der Gruppe der Viskositätsmodifikatoren, Stabilisatoren, Farbstoffe und Bitterstoffe, umfasst.

Damit ist auch eine emulgierbare oder selbstemulgierende flüssige Zusammensetzung zur Regulierung des Pflanzenwachstums Gegenstand der vorliegenden Erfindung, die
a) 5 bis 50 Gew.-% Cyanamid,
b) 10 bis 90 Gew.-% eines Gemisches aus mindestens einem Öl und mindestens einem mit Wasser mischbaren organischen Lösemittel, und
c) 0,1 bis 10 Gew.-% mindestens eines Emulgators, und
d) 0,1 bis 5 Gew.-% mindestens eines weiteren Hilfs- und Zusatzstoffes
umfasst, insbesondere enthält, wobei das Cyanamid in der Zusammensetzung, insbesondere in dem Gemisch und ganz besonders bevorzugt in dem Lösemittel, in gelöster Form vorliegt.

Ganz besonders bevorzugt umfasst eine emulgierbare oder selbstemulgierende flüssige Zusammensetzung zur Regulierung des Pflanzenwachstums gemäß der vorliegenden Erfindung
a) 15 bis 50 Gew.-% Cyanamid,
b) 50 bis 80 Gew.-% eines Gemisches aus mindestens einem Öl und mindestens einem mit Wasser mischbaren organischen Lösemittel, und
c) 0,1 bis 5 Gew.-% mindestens eines Emulgators, und
d) 0,1 bis 5 Gew.-% mindestens eines weiteren Hilfs- und Zusatzstoffes,
wobei das Cyanamid in der Zusammensetzung, insbesondere in dem Gemisch und ganz besonders bevorzugt in dem Lösemittel, in gelöster Form vorliegt.

Es kann jedoch auch vorgesehen sein, dass eine erfindungsgemäße flüssige Zusammensetzung neben den genannten Inhaltsstoffen a), b), c) und gegebenenfalls d) keine weiteren Inhaltsstoffe aufweist und somit aus den genannten Inhaltstoffen besteht. Weiterhin bevorzugt ist dabei vorgesehen, dass die flüssige Zusammensetzung eine selbstemulgierende Zusammensetzung ist und/oder eine Viskosität von weniger als 1 Pa*s aufweist.

Die hiermit beschriebene emulgierbare oder selbstemulgierende flüssige Zusammensetzung zeigt im Vergleich zu einer wässrigen, bereits stabilisierten Cyanamidlösung bei der Lagerung eine verbesserte Stabilität auf und ist zur Regulierung des Pflanzenwachstums bzw. als Formulierung für einen Cyanamid-haltigen Pflanzenwachstumsregulator bestens geeignet. Damit ist im Umfang der vorliegenden Erfindung auch eine aus bzw. mit dieser emulgierbaren oder selbstemulgierenden flüssigen Zusammensetzung hergestellte Emulsion Gegenstand der vorliegenden Erfindung, die Wasser und diese flüssige Zusammensetzung umfasst, bzw. enthält.

Die zur Anwendung fertige Emulsion umfasst dabei vorzugsweise Wasser und die erfindungsgemäße flüssige Zusammensetzung in einem Gewichtsverhältnis von 1000:1 bis 1:1, vorzugsweise von 500:1 bis 2:1, insbesondere 200:1 bis 10:1 und am meisten bevorzugt von 150:1 bis 20:1.

Des Weiteren ist die Verwendung der hiermit beschriebenen emulgierbaren oder selbstemulgierenden flüssigen Zusammensetzung oder einer aus bzw. mit dieser emulgierbaren oder selbstemulgierenden flüssigen Zusammensetzung hergestellten Emulsion als Mittel zur Regulierung des Pflanzenwachstums, insbesondere als Pflanzenwachstumsregulator, von der vorliegenden Erfindung umfasst.

Die nachfolgenden Beispiele sollen die Erfindung näher erläutern.

### Beispiele

### Beispiel 1: Herstellung der erfindungsgemäßen Formulierung

In einem Rührbehälter wurden 352 g raffinierter Rapsölmethylester vorgelegt. Nacheinander wurden 376 g Ethanol (wasserfrei, vergällt mit ca. 1 % Petrolether) und 25 g Marlosol TA3050 (ein iso-C13-Ethoxylat, Hersteller Sasol AG, Marl) eingetragen. Dann wurde zu der Mischung 247 g festes Cyanamid (Cyanamid F1000, Hersteller Alzchem AG) zugegeben und unter leichtem Erwärmen bei 20°C für 1 Stunde gerührt. Es resultierten 1000 g einer gelblichen, klaren Lösung. Üblicherweise wird eine derartige Formulierung als Emulsionskonzentrat (EC) bezeichnet.

Marlosol TA3040 kann mit identischem Ergebnis durch die technisch äquivalenten Produkte Lutensol TO5 (Hersteller BASF) oder TEGO Alkanol TD6 (Hersteller Evonik-Goldschmidt) ersetzt werden.

### Beispiel 2: Prüfung der Stabilität der erfindungsgemäßen Formulierung

100 g der Formulierung aus Beispiel 1 wurden in eine PE-Flasche gegeben und bei 60°C in einer Wärmekammer gelagert. Die Konzentration an Cyanamid sowie die Konzentration des daraus entstehenden Dimers Dicyandiamid wurden analytisch verfolgt. Als Vergleich diente eine handelsübliche nominal 50%ige wässrige Cyanamid-Formulierung (Dormex. Hersteller Alzchem AG) sowie eine auf 25% verdünnte wässrige Cyanamid-Lösung (hergestellt durch Mischung von 50 g Dormex und 50 g demineralisiertem Wasser). Die Ergebnisse der Stabilitätsprüfung waren:

| | Formulierung aus Beispiel 1 | Dormex 50%ig | Dormex auf 25% verdünnt |
|---|---|---|---|
| Ausgangswerte zu Beginn der Warmlagerung | 25,8% Cyanamid | 51,1% Cyanamid | 25,9% Cyanamid |
| | 0,05% Dicyandiamid | 0,8% Dicyandiamid | 0,49% Dicyandiamid |
| nach 48 Stunden bei 60°C | 25,1% Cyanamid | 49,8% Cyanamid | 25,1% Cyanamid |
| | 0,42% Dicyandiamid entspricht einem relativen Wirkstoffverlust von 2,7% | 2,1% Dicyandiamid entspricht einem relativen Wirkstoffverlust von 2,5% | 0,99% Dicyandiamid entspricht einem relativen Wirkstoffverlust von 3,1% |
| nach 96 Stunden bei 60°C | 23,8% Cyanamid | 46,0% Cyanamid | 22,7% Cyanamid |
| | 1,45% Dicyandiamid entspricht einem relativen Wirkstoffverlust von 7,8% | 6,0% Dicyandiamid entspricht einem relativen Wirkstoffverlust von 10,0% | 3,51% Dicyandiamid entspricht einem relativen Wirkstoffverlust von12,3% |

Erfahrungsgemäß simuliert dieser beschleunigte Lagertest bei 60°C die typische Lagerstabilität bei Raumtemperatur über einen Zeitraum von 1 bis 2 Jahren. Die Ergebnisse zeigen, dass der relative Wirkstoffverlust (die Cyanamid-Abnahme bezogen auf die Cyanamid-Ausgangskonzentration) bei der erfindungsgemäßen EC-Formulierung besonders bei längeren Lagerzeiten besser ist im Vergleich zur etablierten Dormex-Lösung. Wie die Vergleichsversuche mit der 25%igen wässrigen Lösung zeigen, ist dieser Effekt nicht auf die niedrigere Cyanamid-Konzentration, sondern auf die nichtwässrige, damit besser haltbare Formulierung zurückzuführen.

### Beispiel 3a: Herstellung einer Anwendungslösung

98 g Leitungswasser wurden in einem Rührbehälter vorgelegt, hierzu wurden 2,0 g der erfindungsgemäßen Lösung aus Beispiel 1 (des EC-Konzentrats) zugegeben. Es bildete sich innerhalb weniger Sekunden eine gleichmäßig trübe Emulsion von Öl in Wasser, wobei der Cyanamid-Anteil hauptsächlich in die Wasserphase überging.

### Beispiel 3b: Herstellung einer Vergleichs-Anwenderlösung

Zum Vergleich wurde eine dem Stand der Technik entsprechende, rein wässrige Lösung von 1,0 g Dormex (mit einem Gehalt von 51,1% Cyanamid) in 99,0 g Leitungswasser hergestellt.

Beide Anwendungslösungen 3a und 3b hatten eine Wirkstoff-Konzentration von rund 0,5% Cyanamid.

### Beispiel 4: Austestung als Wachstumsregulator für Pflanzen

Zu Beginn der Dormanzperiode Ende November wurden von einem Apfelbaum Sorte Topaz Stecklinge geschnitten und auf je 15 cm Länge (ca. 6 Knospenaugen) abgelängt. Die Stecklinge wurden in 3 Gruppen eingeteilt.
Gruppe 1 wurde in reinem Leitungswasser für 15 Sekunden getaucht und dann abtropfen lassen
Gruppe 2 wurde in der erfindungsgemäßen Anwendungslösung aus Beispiel 3a für 15 Sekunden getaucht und ebenfalls abtropfen lassen.
Gruppe 3 wurde in der Vergleichs-Anwenderlösung aus Beispiel 3b getaucht und abtropfen lassen.

Die Stecklinge aus Gruppe 1, 2 und 3 wurden jeweils getrennt in mit Leitungswasser gefüllte Glasbehälter gestellt und unter künstlicher Belichtung bei 20°C für 30 Tage inkubiert. Die Ergebnisse zeigten:
Gruppe 1: es zeigte sich keinerlei Knospenaustrieb
Gruppe 2: es zeigte sich ein starker Knospenaustrieb, meist waren 3 bis 4 Knospen zu Kurztrieben mit 3 bis 4 Blättern ausgetrieben
Gruppe 3: es zeigte sich ein mäßiger Knospenaustrieb, bevorzugt an der Triebspitze, mit einer Blattzahl von meist nur 2 bis 3

Zusammenfassend zeigt sich somit, dass die erfindungsgemäße Formulierung eine vorteilhafte Wirkung auf den Knospenaustrieb hat, mit gegenüber der bekannten wässrigen Dormex-Formulierung verbesserter Wirkung.

Zusammenfassend ermöglicht die erfindungsgemäße EC-Formulierung eine verbesserte Lagerstabilität der Wirkstoff-Konzentrat-Lösung in Kombination mit einer verbesserten dormanzbrechenden Wirkung der Anwenderlösung.

## Patentansprüche

1. Emulgierbare oder selbstemulgierende flüssige Zusammensetzung zur Regulierung des Pflanzenwachstums umfassend
a) 5 bis 50 Gew.-% Cyanamid,
b) 10 bis 90 Gew.-% eines Gemisches aus mindestens einem Öl und mindestens einem mit Wasser mischbaren organischen Lösemittel, und
c) 0,1 bis 10 Gew.-% mindestens eines Emulgators,
wobei das Cyanamid in der Zusammensetzung in gelöster Form vorliegt.

2. Zusammensetzung nach Anspruch 1, **dadurch gekennzeichnet, dass** das organische Lösemittel ausgewählt wird aus der Gruppe der wasserlöslichen Alkohole, Ketone, Nitrile und Amide sowie Mischungen hiervon.

3. Zusammensetzung nach Anspruch 1 oder 2, **dadurch gekennzeichnet, dass** das organische Lösemittel ausgewählt wird aus der Gruppe Ethanol, Isopropanol, n-Propanol, Aceton, Methylethylketon, Acetonitril, Propionitril, Formamid, Dimethylformamid und N-Methylpyrrilidon sowie Mischungen hiervon.

4. Zusammensetzung nach mindestens einem der vorgenannten Ansprüche, **dadurch gekennzeichnet, dass** die Zusammensetzung weniger als 5 Gew.-%, insbesondere weniger als 3 Gew.-%, Wasser umfasst.

5. Zusammensetzung nach mindestens einem der vorgenannten Ansprüche, **dadurch gekennzeichnet, dass** das Öl ausgewählt wird aus der Gruppe Mineralöl, Paraffinöl, Weissöl, gesättigten lineare oder verzweigte aliphatische Kohlenwasserstoffe, Ester von gesättigten oder ungesättigten Fettsäuren mit ein-, zwei- oder dreiwertigen C1- bis C5-Alkoholen und Ether von Fettalkoholen mit C1- bis C5-Alkoholen sowie Mischungen hiervon.

6. Zusammensetzung nach mindestens einem der vorgenannten Ansprüche, **dadurch gekennzeichnet, dass** das Gemisch das organische Lösemittel und das Öl in einem Verhältnisbereich organisches Lösemittel : Öl von 4 : 1 bis 1 : 4, insbesondere von 2 : 1 bis 1 : 2 enthält.

7. Zusammensetzung nach mindestens einem der vorgenannten Ansprüche, **dadurch gekennzeichnet, dass** der Emulgator ein ionischer, ein nichtionischer oder ein zwitterionischer Emulgator, insbesondere ein nichtionischer Emulgator, ist.

8. Zusammensetzung nach mindestens einem der vorgenannten Ansprüche, **dadurch gekennzeichnet, dass** der Emulgator ausgewählt wird aus der Gruppe der Öl-in-Wasser-Emulgatoren (O/W-Emulgator), Wasser-in-Öl-Emulgatoren (W/O-Emulgator), Öl-in-Wasser-in-Öl-Emulgatoren (O/W/O-Emulgator) oder Wasser-in-ÖI-in-Wasser-Emulgatoren (W/O/W-Emulgator), insbesondere ein Öl-in-Wasser-Emulgator ist.

9. Zusammensetzung nach mindestens einem der vorgenannten Ansprüche, **dadurch gekennzeichnet, dass** die Zusammensetzung weiterhin mindestens einen weiteren Hilfs- und Zusatzstoff, insbesondere aus der Gruppe der Viskositätsmodifikatoren, Stabilisatoren, Farbstoffe und Bitterstoffe, umfasst.

10. Zusammensetzung nach mindestens einem der vorgenannten Ansprüche, **dadurch gekennzeichnet, dass** die Zusammensetzung eine selbstemulgierende Zusammensetzung ist und/oder eine Viskosität von weniger als 1 Pa*s aufweist.

11. Emulsion zur Regulierung des Pflanzenwachstums umfassend Wasser und eine Zusammensetzung nach mindestens einem der vorgenannten Ansprüche 1 bis 10.

12. Verwendung einer Zusammensetzung nach mindestens einem der vorgenannten Ansprüche 1 bis 10 oder einer Emulsion nach Anspruch 11 als Mittel zur Regulierung des Pflanzenwachstums, insbesondere als Pflanzenwachstumsregulator.

## Claims

1. Emulsifiable or self-emulsifying liquid composition for regulating plant growth, comprising:
a) 5 to 50 wt.% cyanamide,
b) 10 to 90 wt.% of a mixture of at least one oil and at least one organic solvent that is miscible with water, and
c) 0.1 to 10 wt.% of at least one emulsifier, wherein the cyanamide is present in the composition in dissolved form.

2. Composition according to claim 1, **characterised in that** the organic solvent is selected from the group consisting of water-soluble alcohols, ketones, nitriles and amides, and mixtures thereof.

3. Composition according to either claim 1 or claim 2, **characterised in that** the organic solvent is selected from the group consisting of ethanol, isopropanol, n-propanol, acetone, methyl ethyl ketone, acetonitrile, propionitrile, formamide, dimethylformamide and N-methyl pyrrilidone, and mixtures thereof.

4. Composition according to at least one of the preceding claims, **characterised in that** the composition contains less than 5 wt.%, in particular less than 3 wt.%, water.

5. Composition according to at least one of the preceding claims, **characterised in that** the oil is selected from the group consisting of mineral oil, paraffin oil, white oil, saturated linear or branched aliphatic hydrocarbons, esters of saturated or unsaturated fatty acids having monovalent, divalent or trivalent C1 to C5 alcohols and ethers of fatty alcohols having C1 to C5 alcohols, and mixtures thereof.

6. Composition according to at least one of the preceding claims, **characterised in that** the mixture contains the organic solvent and the oil in a ratio range of organic solvent to oil of from 4:1 to 1:4, in particular from 2:1 to 1:2.

7. Composition according to at least one of the preceding claims, **characterised in that** the emulsifier is an ionic, a non-ionic or a zwitterionic emulsifier, in particular a non-ionic emulsifier.

8. Composition according to at least one of the preceding claims, **characterised in that** the emulsifier is selected from the group consisting of the oil-in-water emulsifiers (O/W emulsifier), water-in-oil emulsifiers (W/O emulsifier), oil-in-water-in-oil emulsifiers (O/W/O emulsifier) and water-in-oil-in-water emulsifiers (W/O/W emulsifier), and in particular is an oil-in-water emulsifier.

9. Composition according to at least one of the preceding claims, **characterised in that** the composition further comprises at least one additional additive, in particular from the group consisting of viscosity modifiers, stabilisers, dyes and bitter principles.

10. Composition according to at least one of the preceding claims, **characterised in that** the composition is a self-emulsifying composition and/or has a viscosity of less than 1 Pa*s.

11. Emulsion for regulating plant growth, comprising water and a composition according to at least one of the preceding claims 1 to 10.

12. Use of a composition according to at least one the preceding claims 1 to 10, or of an emulsion according to claim 11, as an agent for regulating plant growth, in particular as a plant-growth regulator.

## Revendications

1. Composition liquide émulsionnable ou auto-émulsionnable pour la régulation de la croissance de plantes, comportant
a) 5 à 50 % en poids de cyanamide,
b) 10 à 90 % en poids d'un mélange d'au moins une huile et au moins un solvant organique miscible dans l'eau, et
c) 0,1 à 10 % en poids d'au moins un émulsifiant,
dans laquelle le cyanamide est présent dans la composition sous forme dissoute.

2. Composition selon la revendication 1, **caractérisée en ce que** le solvant organique est choisi dans le groupe des alcools hydrosolubles, des cétones, des nitriles et des amides, ainsi que des mélanges de ceux-ci.

3. Composition selon la revendication 1 ou 2, **caractérisée en ce que** le solvant organique est choisi dans le groupe de l'éthanol, l'isopropanol, le n-propanol, l'acétone, la méthyléthylcétone, l'acétonitrile, le propionitrile, le formamide, le diméthylformamide et la N-méthylpyrrilidone ainsi que des mélanges de ceux-ci.

4. Composition selon au moins l'une des revendications précédentes, **caractérisée en ce que** la composition comprend moins de 5 % en poids, en particulier moins de 3 % en poids d'eau.

5. Composition selon au moins l'une des revendications précédentes, **caractérisée en ce que** l'huile est choisie dans le groupe de l'huile minérale, l'huile de paraffine, l'huile blanche, les hydrocarbures aliphatiques saturés, linéaires ou ramifiés, les esters d'acides gras saturés ou insaturés avec des alcools en C1 à C5 monovalents, divalents ou trivalents et les éthers d'alcools gras avec des alcools en C1 à C5 ainsi que des mélanges de ceux-ci.

6. Composition selon au moins l'une des revendications précédentes, **caractérisée en ce que** le mélange contient le solvant organique et l'huile dans une plage de solvant organique : huile de 4:1 à 1:4, en particulier de 2:1 à 1:2.

7. Composition selon au moins l'une des revendications précédentes, **caractérisée en ce que** l'émulsifiant est un émulsifiant ionique, non ionique ou zwitterionique, en particulier, un émulsifiant non ionique.

8. Composition selon au moins l'une des revendications précédentes, **caractérisée en ce que** l'émulsifiant est choisi dans le groupe des émulsifiants huile dans eau (émulsifiant H/E), des émulsifiants eau dans huile (émulsifiant E/H), des émulsifiants huile dans eau dans huile (H/E/H) ou des émulsifiants eau dans huile dans eau (E/H/E), en particulier, est un émulsifiant huile dans eau.

9. Composition selon au moins l'une des revendications précédentes, **caractérisée en ce que** la composition comporte en outre au moins un autre adjuvant ou additif, en particulier, du groupe des modificateurs de viscosité, des stabilisants, des colorants et des amérisants.

10. Composition selon au moins l'une des revendications précédentes, **caractérisée en ce que** la composition est une composition auto-émulsionnable et/ou présente une viscosité inférieure à 1 Pa*s.

11. Emulsion pour la régulation de la croissance de plantes comportant de l'eau et une composition selon au moins l'une des revendications 1 à 10 précédentes.

12. Utilisation d'une composition selon au moins l'une des revendications 1 à 10 précédentes ou d'une émulsion selon la revendication 11 comme moyen de régulation de la croissance de plantes, en particulier comme régulateur de la croissance de plantes.
